# EUROPÄISCHE PATENTSCHRIFT

(11) **EP 2 337 967 B1**
(45) Veröffentlichungstag und Bekanntmachung des Hinweises auf die Patenterteilung: **23.11.2011**
(21) Anmeldenummer: 09781499.0
(22) Anmeldetag: 05.08.2009
(51) Int. Cl.: F16D 65/12

(54) **BREMSSCHEIBE**
BRAKE DISK
DISQUE DE FREIN

(30) Priorität: 17.09.2008 DE 102008042173
(43) Veröffentlichungstag der Anmeldung: 29.06.2011
(73) Patentinhaber: Robert Bosch GmbH, 70469 Stuttgart (DE)
(72) Erfinder: MUELLER; Hans-Walter, 80939 München (DE)
(86) Internationale Anmeldenummer: PCT/EP2009/060129
(87) Internationale Veröffentlichungsnummer: WO 2010/031634

(56) Entgegenhaltungen:
- EP-A- 0 198 217
- US-A- 5 823 303

## Beschreibung

### Stand der Technik

Die Erfindung betrifft eine belüftete Bremsscheibe, mit einem Reibring und einem über Verbindungsglieder mit einem Reibring verbundenen Tragteil, insbesondere Scheibentopf. Aus der DE 43 32 951 A1 ist eine belüftete Bremsscheibe bekannt, die einen Reibring und einen mit Verbindungsgliedern mit dem Reibring verbundenen Tragteil aufweist. Die Verbindungsglieder sind insbesondere als Stifte, Bolzen oder dergleichen ausgebildet und über den Umfang des Tragteils verteilt angeordnet. Die Verbindungsglieder ragen in Aussparungen in die Umfangswand des Reibrings. Der Reibring ist somit "schwimmend" auf dem Scheibentopf gelagert. Zwar können sich hier bei einer durch den Bremsvorgang hervorgerufenen Temperaturerhöhung ohne Gefahr von Verspannungen die Verbindungsglieder in radialer Richtung dehnen. Aber bei größeren Drehmomenten besteht die Gefahr, dass aufgrund der freien Länge der Verbindungsglieder, d. h. aufgrund des Abstandes zwischen Tragteil und Reibring, sich die Verbindungsglieder verbiegen können und sich im Extremfall aus ihrem Sitz lösen können.

### Vorteile der Erfindung

Die erfindungsgemäße Bremsscheibe mit den kennzeichnenden Merkmalen des Anspruchs 1 hat demgegenüber den Vorteil, dass die gegebenen Einbauverhältnisse der Bremsscheibe nicht verändert werden müssen, aber der Luftdurchtritt verbessert wird. Durch die Anformung der Fortsätze zur Führung der Verbindungsteile an den Querträgern der Reibflächen wird zwischen dem Fortsatz und den Reibflächen ein Luftraum hergestellt, der den Lufteintritt in die Kühlkanäle verbessert. Zur Übertragung des Bremsmomentes kann sich der Fortsatz zur Führung der Verbindungsglieder an den Querträgern der Reibflächen in einfacher Weise abstützen. Zur Abstützung selbst sind keine zusätzlichen Bauteile notwendig, da die Abstützung an den bereits vorhandenen Querträgern erfolgt und somit die Querträger eine weitere Funktion übernehmen. Ferner kann durch diese Maßnahme das Verhältnis zwischen der Wanddicke der Reibfläche und den Verbindungsgliedern von 3:1 in idealer Weise eingehalten werden. Bei diesem Dickenverhältnis wird nicht nur der Temperaturgradient zwischen den Reibflächen und dem Fortsatz verändert, auch der Fortsatz selbst wird von Kühlluft umströmt. Die Rißneigung dieser Bauteile wird dadurch verringert. Die nun nahezu über den gesamten Umfang erfolgende Belüftung des Fortsatzes für die Führung der Verbindungsglieder führt zu einem geringem Aufheizen des Fortsatzes. Dies führt nun dazu, dass sich nur geringe Unterschiede in der Wärmeausdehnung für die Verbindungsglieder, die normalerweise aus Stahl bestehen und dem Fortsatz, der gewöhnlich aus Gusseisen besteht, ergeben. Dies bedingt, dass die Beweglichkeit der Stifte in der Bohrung des Fortsatzes in allen Temperaturbereichen während des Betriebs gewährleistet ist. In einfacher Weise ist es nun möglich, den Fortsatz mit verschiedenen Außengeometrien bzw. Außenkonturen herzustellen. Bei Verwendung einer runden bzw. zylindrischen Außenkontur ist in einfacher Weise die Außenkontur und die Bohrung für die Verbindungsglieder gleichzeitig und einfach bearbeitbar.

### Zeichnung

In der Figur 1 ist eine Bremsscheibe in Draufsicht dargestellt,
Figur 2 zeigt eine perspektivische Darstellung einer Bremsscheibe ohne Scheibentopf,
Figur 3 zeigt einen Teilschnitt A/A durch die Bremsscheibe nach Figur 1 und
Figur 4 einen Teilschnitt durch ein weiteres Ausführungsbeispiel.

### Beschreibung der Ausführungsbeispiele

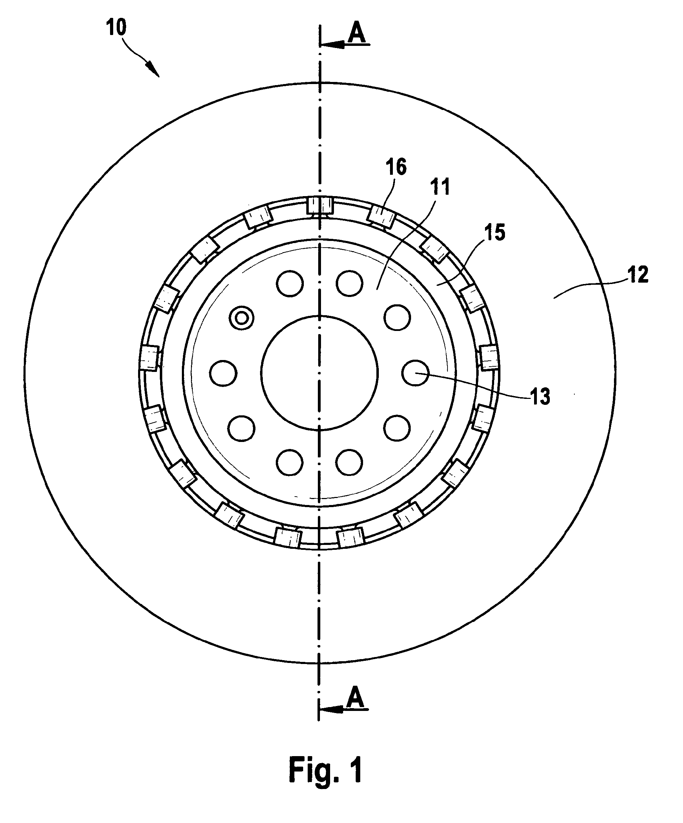

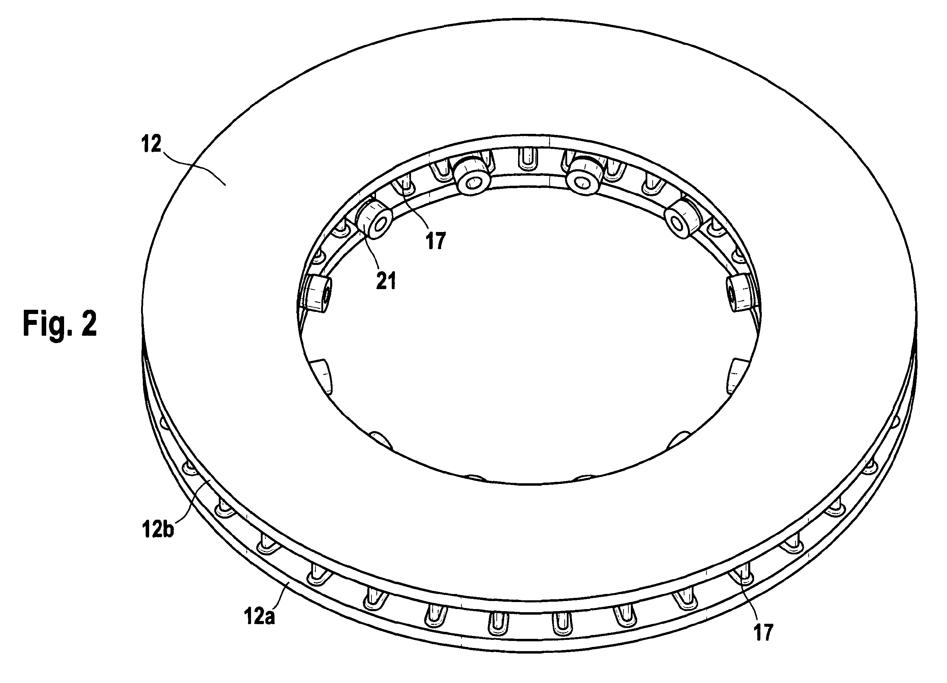

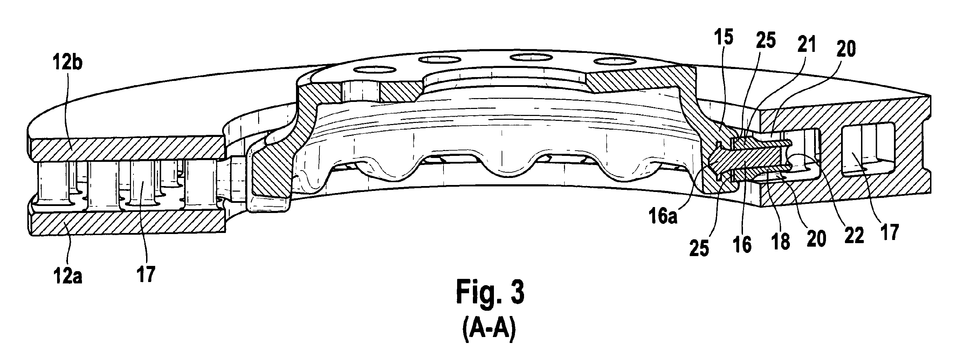

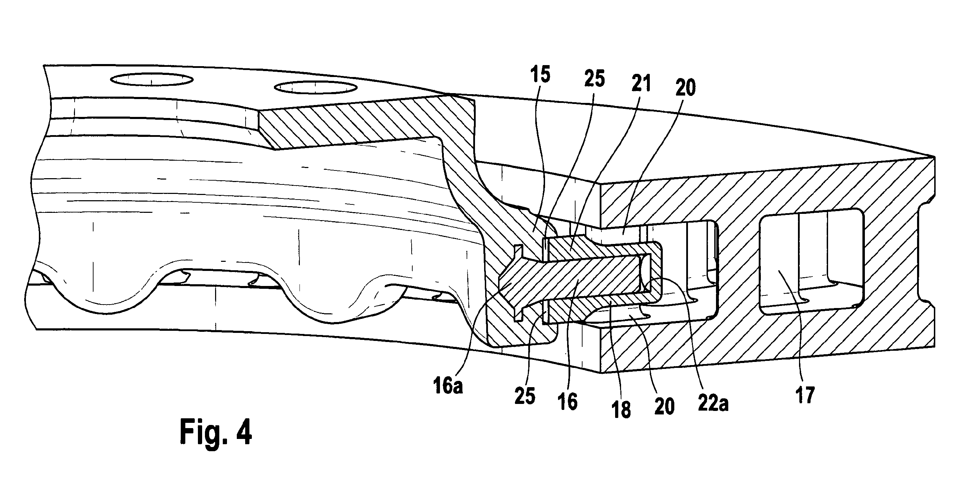

In der Figur 1 ist mit 10 eine Bremsscheibe bezeichnet, die aus einem Scheibentopf 11 und einem Reibring 12 besteht. In bekannter Weise ist der Scheibentopf 11 in hier nicht dargestellter Weise auf eine Nabe eines Fahrzeugs befestigt, wobei die Schrauben zur Befestigung durch die Bohrungen 13 des Scheibentopfs 11 ragen. Über eine Vielzahl von in der Umfangswand 15 des Scheibentopfs 11 eingeformten Verbindungsgliedern 16 in Form von Stiften oder Bolzen oder dergleichen ist der Scheibentopf 11 mit dem Reibring 12 - wie in der Figur 2 und 3 näher dargestellt - verbunden. Der Reibring 12 besteht aus zwei Reibringen 12a und 12b, welche durch eine Vielzahl von über dem Umfang verteilten und insbesondere in radialer Richtung verlaufender Stege 17 miteinander verbunden sind, so dass eine belüftete Bremsscheibe entsteht. Wie aus Figur 2 und Figur 3 näher ersichtlich ist, sind an zwei aufeinander folgenden Stegen 17 radial verlaufende Trägerstege 18 angeordnet. Die Trägerstege 18 sind dabei abschnittsweise angeordnet, so dass sich jeweils ein freier Steg 17 zwischen den in Umfangsrichtung gesehen hintereinanderfolgenden Trägerstegen 18 befindet. Es wäre aber auch eine andere radiale Anordnung der Trägerstege 18 denkbar. Wesentlich ist, dass die Trägerstege 18 sich an den Stegen 17 befinden und möglichst zu den Reibringhälften 12a und 12b hin einen Spalt 20 aufweisen. Dieser Spalt 20 ist notwendig, damit die Trägerstifte 18 vom kühlenden Luftstrom möglichst umfangflächig erfasst werden und dass von den Reibringhälften 12a bzw. 12b zu den Trägerstiften 18 möglichst kein bzw. nur ein möglichst geringer Wärmeübergang erfolgen kann. Der Trägersteg 18 hat einen Fortsatz 21, mit dem der Trägersteg 18 in Richtung des Scheibentopfs 11 über den Reibring 12 radial hinausragt. In besonders bevorzugter Weise kann der Trägersteg 18 zylindrisch oder im Querschnitt gesehen rechteckig oder qudratisch ausgebildet sein. Der Trägersteg 18 weist eine durchgehende Bohrung 22 auf, die auch durch den Fortsatz 21 führt. Die Bohrung 22 dient zur Aufnahme der Stifte 16. Wie aus der Figur 4 ersichtlich ist, kann die Bohrung 22 auch als Sacklochbohrung 22a ausgebildet sein. Die Bohrungen 22 sind in den Figuren in der Mittellängsachse des Reibrings 12 ausgebildet. Es wäre aber auch ein Versatz dieser Bohrungen 22 möglich, je nach dem, wie die Stifte 16 am Scheibentopf 11 ausgebildet sind.

Der Reibring 12 besteht aus Gusseisen, während der Scheibentopf 11 aus Leichtmetall, insbesondere Aluminium oder Magnesium besteht. Während des Gießprozesses werden am Reibring 12 auch die Trägerstege 18 mit angegossen. Der Stift 16 ist aus Edelstahl, insbesondere nichtrostendem Edelstahl hergestellt. Bei der Herstellung wird zuerst der aus Gusseisen bestehende Reibring 12, wie oben erwähnt, hergestellt und die Stifte 16 in die Bohrungen 22 eingesetzt. Anschließend wird der Scheibentopf 11 aufgegossen. Hierbei werden auch die Köpfe 16a der Stifte 16 mit in die Außenwand 15 des Scheibentopfs 11 eingegossen. Hierbei können die Fortsätze 21 der Trägerstege 18 auch zum Aufnehmen im Gießwerkzeug für den Scheibentopf 11 mit verwendet werden. Das Aufgießen erfolgt direkt auf die Stirnseite der Fortsätze 21 des Reibrings 12. Beim Abkühlen des Scheibentopfs 11 entsteht ein Spalt 25 zwischen der Stirnseite des Fortsatzes 21 und der Stirnseite der Außenwand 15 des Scheibentopfs 11. Dieser Spalt 25 soll aber so gering wie möglich sein. Der Reibring 12 ist auf dem Scheibentopf 11 schwimmend gelagert. Dazu müssen die Stifte 16 in den Bohrungen 22 mit relativ geringem Spiel angeordnet sein, so dass sich der Reibring 12 auf den Stiften 16 geringfügig bewegen kann. Dies ist notwendig, da sich beim Bremsvorgang der Reibring 12 erwärmt und geringfügig vom Scheibentopf 11 weg in radialer Richtung ausdehnt. Da aufgrund dieser geringfügigen Relativbewegung keine absolute Dichtheit möglich ist, befindet sich im Spalt 25 ein temperaturfestes Gleitmittel. Dadurch wird einerseits der Gleitprozess des Stiftes 16 in der Bohrung 22 sichergestellt und andererseits wird eine Korrosion durch eventuell in den Spalt eindringendes Korrosionsmittel verhindert.

## Patentansprüche

1. Belüftete Bremsscheibe (10) mit einem aus wenigstens zwei von Stegen (17) getrennten Scheiben (12a, 12b) bestehenden Reibring (12) und einem Tragteil (11), wobei am Umfang des Tragteils (11) mehrere mit dem Tragteil (11) verbundene Verbindungsteile (16) vorhanden sind, die in am Reibring (12) ausgebildeten Trägerstegen (18) ragen, wobei die Trägerstege (18) an wenigstens einem Steg (17) des Reibrings (12) angeordnet sind, **dadurch gekennzeichnet, dass** die Trägerstege (18) mindestens zu einer der Scheiben (12a, 12b) des Reibrings (12) einen Spalt (20) aufweisen.

2. Bremsscheibe (10) nach Anspruch 1, **dadurch gekennzeichnet, dass** je ein Trägersteg (18) abschnittsweise an je zwei Stegen (17) angeordnet ist.

3. Bremsscheibe (10) nach Anspruch 1, **dadurch gekennzeichnet, dass** je ein Trägersteg (18) an je einem Steg (17) angeordnet ist.

4. Bremsscheibe (10) nach einem der Ansprüche 1 bis 3, **dadurch gekennzeichnet, dass** die Trägerstege (18) einen radial über den Reibring (12) hinausragenden Fortsatz (21) aufweisen.

5. Bremsscheibe (10) nach einem der Ansprüche 1 bis 4, **dadurch gekennzeichnet, dass** die Trägerstege (18) eine zylindrische Form aufweisen.

6. Bremsscheibe (10) nach einem der Ansprüche 1 bis 5, **dadurch gekennzeichnet, dass** zwischen dem Umfang (15) des Tragteils (11) und der Stirnseite der Trägerstege (18) ein Spalt (25) vorhanden ist.

7. Bremsscheibe (10) nach Anspruch 6, **dadurch gekennzeichnet, dass** sich im Spalt (25) ein hochtemperaturfestes, korrosionshemmendes Medium befindet.

8. Bremsscheibe (10) nach einem der Ansprüche 1 bis 7, **dadurch gekennzeichnet, dass** das Tragteil (11) aus Leichtmetall, insbesondere Aluminium, der Reibring (12) aus Gusseisen und das Verbindungsteil (16) aus Edelstahl besteht.

9. Bremsscheibe (10) nach einem der Ansprüche 1 bis 8, **dadurch gekennzeichnet, dass** das Verbindungsglied (16) ein Stift, Bolzen oder dergleichen ist.

## Claims

1. Ventilated brake disc (10), comprising a friction ring (12), which consists of at least two discs (12a, 12b) separated by webs (17), and a bearing part (11), wherein a plurality of connecting parts (16) connected to the bearing part (11) are present over the circumference of the bearing part (11) and project into support webs (18) formed on the friction ring (12), wherein the support webs (18) are arranged on at least one web (17) of the friction ring (12), **characterized in that** the support webs (18) have a gap (20) at least to one of the discs (12a, 12b) of the friction ring (12).

2. Brake disc (10) according to Claim 1, **characterized in that** a respective support web (18) is arranged in certain portions on two respective webs (17).

3. Brake disc (10) according to Claim 1, **characterized in that** a respective support web (18) is arranged on a respective web (17).

4. Brake disc (10) according to one of Claims 1 to 3, **characterized in that** the support webs (18) have an extension (21) projecting radially beyond the friction ring (12).

5. Brake disc (10) according to one of Claims 1 to 4, **characterized in that** the support webs (18) have a cylindrical shape.

6. Brake disc (10) according to one of Claims 1 to 5, **characterized in that** there is a gap (25) between the circumference (15) of the bearing part (11) and the end face of the support webs (18).

7. Brake disc (10) according to Claim 6, **characterized in that** a medium which inhibits corrosion and can withstand high temperatures is located in the gap (25).

8. Brake disc (10) according to one of Claims 1 to 7, **characterized in that** the bearing part (11) consists of light metal, in particular aluminium, the friction ring (12) consists of cast iron and the connecting part (16) consists of high-grade steel.

9. Brake disc (10) according to one of Claims 1 to 8, **characterized in that** the connecting element (16) is a pin, a bolt or the like.

## Revendications

1. Disque de frein ventilé (10) comprenant un anneau de friction (12) constitué d'au moins deux disques (12a, 12b) séparés par des entretoises (17) et une partie portante (11), plusieurs pièces de connexion (16) reliées à la partie portante (11) étant prévues sur la périphérie de la partie portante (11), lesquelles font saillie dans des nervures de support (18) réalisées sur l'anneau de friction (12), les nervures de support (18) étant disposées sur au moins une entretoise (17) de l'anneau de friction (12), **caractérisé en ce que** les nervures de support (18) présentent une fente (20) au moins vers l'un des disques (12a, 12b) de l'anneau de friction (12).

2. Disque de frein (10) selon la revendication 1, **caractérisé en ce qu'**à chaque fois une nervure de support (18) est disposée en partie sur deux entretoises (17).

3. Disque de frein (10) selon la revendication 1, **caractérisé en ce qu'**à chaque fois une nervure de support (18) est disposée sur une entretoise (17).

4. Disque de frein (10) selon l'une quelconque des revendications 1 à 3, **caractérisé en ce que** les nervures de support (18) présentent une saillie (21) saillant radialement au-delà de l'anneau de friction (12).

5. Disque de frein (10) selon l'une quelconque des revendications 1 à 4, **caractérisé en ce que** les nervures de support (18) présentent une forme cylindrique.

6. Disque de frein (10) selon l'une quelconque des revendications 1 à 5, **caractérisé en ce qu'**une fente (25) est prévue entre la périphérie (15) de la partie portante (11) et le côté frontal des nervures de support (18).

7. Disque de frein (10) selon la revendication 6, **caractérisé en ce qu'**un milieu anticorrosion et résistant aux hautes températures est disposé dans la fente (25).

8. Disque de frein (10) selon l'une quelconque des revendications 1 à 7, **caractérisé en ce que** la partie portante (11) se compose de métal léger, en particulier d'aluminium, l'anneau de friction (12) se compose de fonte de fer et la pièce de connexion (16) se compose d'acier spécial.

9. Disque de frein (10) selon l'une quelconque des revendications 1 à 8, **caractérisé en ce que** l'organe de connexion (16) est une goupille, un boulon ou similaire.
